# EUROPÄISCHE PATENTANMELDUNG

(11) **EP 4 265 888 A1**
(43) Veröffentlichungstag der Anmeldung: **25.10.2023**
(21) Anmeldenummer: 23162478.4
(22) Anmeldetag: 16.03.2023
(51) Int. Cl.: F01D 5/14

(54) **LEIT- UND LAUFSCHAUFELKRANZ FÜR EIN MANTELSTROMTRIEBWERK**

(30) Priorität: 19.04.2022 DE 102022109455
(71) Anmelder: MTU Aero Engines AG, 80995 München (DE)
(72) Erfinder: Müller-Schindewolffs, Christoph, 80995 München (DE); Brettschneider, Markus, 80995 München (DE); Ramm, Günter, 80995 München (DE); Malzacher, Franz, 80995 München (DE)

(57) **Zusammenfassung**

Die vorliegende Erfindung betrifft einen Leit- und einen Laufschaufelkranz für eine Niederdruckturbine einer Fluggasturbine eines Mantelstromtriebwerks, mit mehreren Schaufelblättern, wobei ein jeweiliges Schaufelblatt mit einem Staffelungswinkel γᵥ < 45° bzw. γ_{b} < 62° - (32° · hₓ) angeordnet ist, und wobei ein erstes und ein dazu in der Umlaufrichtung benachbartes zweites Schaufelblatt solchermaßen vorgesehen sind, dass ein Verhältnis e/t, das sich in einem Kegelschnitt betrachtet ergibt aus
- einem kleinsten freien Strömungsquerschnitt e, der druckseitig des ersten Schaufelblatts von dessen Hinterkante zu einer Saugseite des zweiten Schaufelblatts genommen wird, und
- einer Teilung t der Schaufelblätter,
kleiner 0,31 ist, e/t < 0,31.

## Beschreibung

### Technisches Gebiet

Die vorliegende Erfindung betrifft einen Leit- und einen Laufschaufelkranz für eine Niederdruckturbine einer Fluggasturbine eines Mantelstromtriebwerks.

### Stand der Technik

Der vorliegende Gegenstand richtet sich auf die Niederdruckturbine eines Mantelstromtriebwerks, deren Schaufelkränze über ein Getriebe an den *Fan* gekoppelt sind. Ein solches Triebwerk wird auch als *Geared Turbofan-*Triebwerk bezeichnet (GTF-Triebwerk). Im Betrieb drehen die Laufschaufelkränze dann mit einer im Verhältnis zum *Fan* höheren Drehzahl. Eine "Niederdruckturbine" bezeichnet vorliegend eine Turbine, welche einer stromaufwärtigsten Turbine, welche einer Brennkammer direkt nachgelagert ist, in Strömungsrichtung nachgelagert ist. Eine Niederdruckturbine kann eine mittlere und/oder innerste Welle antreiben.

### Darstellung der Erfindung

Der vorliegenden Erfindung liegt das technische Problem zugrunde, vorteilhafte Schaufelkränze für eine Niederdruckturbine eines Mantelstromtriebwerks anzugeben.

Dies wird erfindungsgemäß mit dem Leitschaufelkranz nach Anspruch 1 und dem Laufschaufelkranz nach Anspruch 2 gelöst. Bei beiden Schaufelkränzen ist ein Verhältnis e/t, das sich ergibt aus
- einem kleinsten Strömungsquerschnitt e (genommen in einem jeweiligen Kegelschnitt von der Hinterkante des einen Schaufelblatts als kürzeste Verbindungslinie zur Saugseite des druckseitig benachbarten Schaufelblatts, siehe unten im Detail), und
- einer Teilung t der Schaufelblätter,
kleiner 0,31, gilt also e/t < 0,31.

Ferner sind für die Schaufelblätter jeweils spezifische Staffelungswinkel γ eingestellt, liegen diese nämlich
- im Falle der Leitschaufeln unter 45°, γᵥ < 45°, und
- bei den Laufschaufeln in Abhängigkeit von einer jeweiligen Radialposition hₓ bei γ_{b} < 62° - (32° · hₓ).

Die Radialposition hₓ reicht dabei per definitionem von 0 am radial inneren Ende des Schaufelblatts bis 1 am radial äußeren Ende davon, hᵢ = 0 und hₐ = 1. In anderen Worten ergibt sich der Wert von hₓ jeweils als Quotient aus dem Abstand der jeweiligen Radialposition vom radial inneren Ende und der radialen Schaufelhöhe h. Folglich nimmt hₓ Werte im Intervall [0; 1] an und geht der Klammerterm der obigen Gleichung radial innen gegen 0 und radial außen gegen 32°. Der Staffelungswinkel γ_{b} muss damit radial innen < 62° sein und radial außen < 30° sein.

Mit diesen geometrischen Randbedingungen lassen sich die Schaufeln auf ein besonderes Design optimieren, bspw. auf eine weitgehend horizontale, also im Axialschnitt betrachtet im Wesentlichen achsparallele Nabenkontur des Ringraums. Diese kann z. B. dahingehend von Vorteil sein, dass sich die Rotorscheiben dann kompakt und damit auch gewichtsreduziert ausführen lassen. Zudem müssen dann zumindest keine allzu großen radialen Distanzen zwischen den Nabenradien der einzelnen Laufschaufeln ausgeglichen werden. Umgekehrt können aus diesem Anforderungsprofil jedoch z. B. vergrößerte Strömungsquerschnitte und verringerte axiale Strömungsgeschwindigkeiten resultieren. Aufgrund der horizontalen Nabenkontur können die Schaufelblätter vergleichsweise lang werden, was geringe Abströmwinkel erfordert bzw. ergibt.

Eine Verringerung der spezifischen axialen Strömungsgeschwindigkeit kann sich bei künftig entwickelten GTF-Triebwerken aber bspw. auch aus im Vergleich zu früheren Generationen erhöhten Drehzahlen der Niederdruckturbine ergeben, wobei die höheren Drehzahlen z. B. das Wirkungsgradniveau verbessern können. Zusammengefasst kann es verschiedene Randbedingungen geben (horizontale Nabenkontur und/oder höhere Drehzahlen), die in der Gesamtschau den Wirkungsgrad verbessern können, für die Beschaufelung der Niederdruckturbine jedoch besondere Anforderungen bedeuten. Aufgrund der geringen axialen Strömungsgeschwindigkeit kann bspw. die Umfangskomponente groß werden und können einzelne Schaufelreihen stark beschleunigen und mit hohem Drall abströmen. Dies kann unter der geringen axialen Strömungsgeschwindigkeit zu sehr kleinen Abströmwinkeln (bezogen auf die Umlaufrichtung) führen. Auf diese Rahmenbedingungen sind die vorliegenden Schaufelkränze optimiert, wobei sich im Einzelnen für die Leit- und die Laufschaufelblätter unterschiedliche geometrische Erfordernisse ergeben, was die nebengeordneten Ansprüche 1 und 2 widerspiegeln.

Mit Blick auf die geringen Abströmwinkel sind bei den erfindungsgemäßen Schaufelkränzen einerseits sehr kleine Staffelungswinkel y eingestellt. Im Falle der Leitschaufelblätter kann der Staffelungswinkel γᵥ dabei über die radiale Höhe im Wesentlichen konstant sein, bevorzugt ist über die gesamte Schaufelhöhe der Staffelungswinkel γᵥ< 45°. Bei den Laufschaufelblättern ist hingegen der Staffelungswinkel γ_{b} mit radialem Verlauf eingestellt. Ferner lässt sich der aerodynamische Abströmwinkel β₂ sehr gut über das Verhältnis e/t definieren bzw. abbilden, sowohl für den Leit- als auch den Laufschaufelkranz (e/t < 0,31).

Bevorzugte Ausführungsformen finden sich in den abhängigen Ansprüchen und der gesamten Offenbarung, wobei bei der Darstellung der Merkmale nicht immer im Einzelnen zwischen Vorrichtungs- und Verfahrens- bzw. Verwendungsaspekten unterschieden wird; jedenfalls implizit ist die Offenbarung hinsichtlich sämtlicher Anspruchskategorien zu lesen. Werden bspw. die Vorteile der Schaufelkränze in bestimmen Betriebszuständen beschrieben, ist dies zugleich als Offenbarung eines entsprechenden Betriebsverfahrens bzw. der entsprechenden Verwendung zu lesen.

Die Angaben "axial", "radial" und "umlaufend", sowie die zugehörigen Richtungen (Axialrichtung etc.), beziehen sich auf die Längsachse des Triebwerks bzw. der Niederdruckturbine, die typischerweise mit der Drehachse des Laufschaufelkranzes zusammenfällt. Der Staffelungswinkel γ wird, wie auch die Größen e und t, in einem (gemeinsamen) jeweiligen Kegelschnitt, insbesondere durch eine Vorder- und Hinterkantenposition auf jeweils entsprechender radialer Kanalhöhe, z.B. bei jeweils 50% der radialen Kanalhöhe, betrachtet, also in einer Kegel- oder Kegelstumpfmantelfläche (die rotationssymmetrisch um die Längsachse ist und vorzugsweise einer Steigung des Ringraums folgt) als Schnittfläche. Die Kegelmantelfläche beinhaltet dabei vorzugsweise die lineare Verbindungslinie von einer jeweiligen radialen Vorderkantenposition, beispielsweise bei 10%, 25%, 50%, 75% oder 90% der radialen Vorderkantenersteckung, zur jeweils entsprechenden Hinterkantenposition, beispielsweise bei 10%, 25%, 50%, 75% bzw. 90% der radialen Hinterkantenersteckung. Der Staffelungswinkel γ wird auf der Kegelmantelfläche und jeweils druckseitig des jeweiligen Schaufelblatts, zwischen dessen Sehne und der Umlaufrichtung genommen.

Die in der vorliegenden Offenbarung definierten Werte oder Bereiche für die genannten Größen, wie e, t, γ, γᵥ, γ_{b} , β₁, β₂, können in einigen Ausführungen in einem Kegelschnitt durch die Vorder- und Hinterkante bei einer (gleichen) jeweiligen Radialerstreckung, z.B. bei 50%, in einigen Ausführungen in mehreren verschiedenen und/oder in einigen Ausführungen in allen Kegelschnitten durch die bzw. alle jeweiligen Vorder- und Hinterkantenpositionen (bei den jeweiligen Radialerstreckungen) vorliegen. Dies gilt auch in der folgenden Beschreibung, in der es für ein besseres Verständnis nur noch "in einem (jeweiligen) / im Kegelschnitt" heißt.

Die Teilung t wird in einem jeweiligen Kegelschnitt zwischen den Hinterkanten jeweilig nächstbenachbarter Schaufelblätter genommen, also in Umlaufrichtung als Abstand zwischen den Hinterkanten. Auch im Falle des freien Strömungsquerschnitts e werden zwei nächstbenachbarte Schaufelblätter im Kegelschnitt betrachtet, wobei der freie Strömungsquerschnitt e dann auf der Druckseite des einen Schaufelblatts, "erstes" Schaufelblatt in der Terminologie der Ansprüche, von dessen Hinterkante weg zur Saugseite des druckseitig nächstbenachbarten Schaufelblatts genommen wird, "zweites" Schaufelblatt in der Terminologie der Ansprüche. Im Einzelnen wird dieser Querschnitt so bestimmt, dass er den kürzesten Abstand von der Hinterkante des ersten Schaufelblatts bis zur Saugseitenfläche des zweiten Schaufelblatts beschreibt.

Im Rahmen der vorliegenden Offenbarung wird auf ein "jeweiliges" Schaufelblatt bzw. das "erste" und "zweite" Schaufelblatt Bezug genommen, was im Allgemeinen nicht implizieren muss, dass sämtliche Schaufelblätter des jeweiligen Kranzes entsprechend ausgeführt sind. Bevorzugt erfüllt jedenfalls der größere Teil (> 50 %) der Schaufelblätter des jeweiligen Kranzes die Kriterien, besonders bevorzugt sind sämtliche Schaufelblätter entsprechend ausgestaltet. Über den Umlauf können dann bspw. alle jeweilig nächstbenachbarten Schaufelblätter paarweise als erstes und zweites Schaufelblatt die anspruchsgemäßen Kriterien erfüllen.

Eine mögliche Untergrenze des Staffelungswinkels γᵥ kann im Falle der Leitschaufelblätter bspw. bei 15° liegen, γᵥ > 15°. Bei den Laufschaufelblättern kann eine Untergrenze des Staffelungswinkels γ_{b} z. B. bei 15° (γ_{b} > 15°) liegen. Das Verhältnis e/t kann bspw. größer 0.15 sein, e/t > 0.15.

Gemäß einer bevorzugten Ausführungsform, die im Falle der Leit- und/oder der Laufschaufelblätter von Interesse sein kann, hat ein jeweiliges Schaufelblatt zumindest in einem radial äußeren Bereich an seiner Vorderkante eine Metallwinkel β₁ > 50°. Der Winkel β₁ wird an der Vorderkante im Kegelschnitt zwischen einer Tangente an die Skelettlinie und der Umlaufrichtung genommen, und zwar zur Saugseite des Schaufelblatts hin. Der vorstehend angegebene Gradbereich (> 50°) wird dabei jedenfalls in den radial äußeren 5 % der radialen Schaufelhöhe h erreicht, also wenn 0 % radial innen und 100 % radial außen liegen, zwischen 95 % und 100 %.

In bevorzugter Ausgestaltung bleibt der Metallwinkel des jeweiligen Schaufelblatts in den radial äußeren 5 % der Schaufelhöhe kleiner 85°, β₁ < 85°. Im Allgemeinen können diese Ober- und die im vorstehenden Absatz diskutierte Untergrenze unabhängig voneinander vorgesehen sein, bevorzugt liegt der Metallwinkel β₁ in einem entsprechenden Bereich, 50°<β₁<85°.

Gemäß einer bevorzugten Ausführungsform ist ein jeweiliger Schaufelkranz für eine ADP-Drehzahl von mindestens achttausend Umdrehungen pro Minute ausgelegt. Eine mögliche Obergrenze, die im Allgemeinen auch unabhängig von der Untergrenze von Interesse sein kann und offenbart sein soll, liegt bei zwölftausend Umdrehungen pro Minute. Die entsprechende Auslegung kann sowohl den Laufschaufelkranz betreffen, der dann im Betrieb entsprechend rotiert, als auch den Leitschaufelkranz, der für die Verwendung zusammen mit einem im Betrieb entsprechend schnelldrehenden Laufschaufelkranz eingestellt ist. Die ADP-Drehzahl ist dabei die Drehzahl im *Aerodynamic Design Point* (ADP), wird also im Betrieb bspw. unter Reiseflug- bzw. Cruise-Bedingungen erreicht.

Gemäß einer bevorzugten Ausführungsform beträgt der mittlere Radius rₘ des jeweiligen Schaufelkranzes mindestens 0,15 m, bevorzugt mindestens 0,19 m. Mögliche Obergrenzen, die im Allgemeinen wiederum auch unabhängig von der Untergrenze von Interesse sein können und offenbart sein sollen, liegen in der Reihenfolge der Nennung zunehmend bevorzugt bei 0,6 m, 0,5 m bzw. 0,4 m bzw. 0,37 m, besonders bevorzugt ist 0,19 m ≤ rₘ ≤ 0,37 m. Der mittlere Radius rₘ wird von der Längsachse in der Radialrichtung bis zur radialen Mitte des Gaskanals genommen; sofern die radiale Mitte ein- und austrittsseitig des jeweiligen Schaufelkranzes auf unterschiedlichen Radialpositionen liegt, wird ein aus Eintritts- und Austrittsseite gebildeter Mittelwert zugrunde gelegt.

Eine bevorzugte Ausgestaltung betrifft das *Aspect Ratio* im jeweiligen Gitter, also das Verhältnis aus radialer Schaufelblatthöhe h zu axialer Gitterbreite b. Dieses kann bspw. bei mindestens 2 liegen, wobei mögliche Obergrenzen (davon unabhängig) bei 5,5 und insbesondere 4,6 liegen, h/b ≤ 5,5 bzw. h/b ≤ 4,6.

Gemäß einer bevorzugten Ausführungsform liegt der Abströmwinkel β₂ eines jeweiligen Schaufelblatts bei höchstens 18°, insbesondere höchstens 17°. Es wird auf die Anmerkungen eingangs zu den geringen Abströmwinkeln verwiesen. Mögliche Untergrenzen liegen bei 14° bzw. 15°, besonders bevorzugt kann also 15° ≤ β₂ ≤ 17° sein. Der Abströmwinkel β₂ wird im Kegelschnitt zwischen einer Senkrechten zur kürzesten Verbindungsstrecke von der Hinterkante des jeweiligen Schaufelblatts zur Saugseite des druckseitig benachbarten Schaufelblatts an der Hinterkante des jeweiligen Schaufelblatts und der Umlaufrichtung genommen.

Die Erfindung betrifft auch eine Niederdruckturbine eines Mantelstromtriebwerks, die einen Leitschaufelkranz nach Anspruch 1 und/oder einen Laufschaufelkranz nach Anspruch 2 aufweist, bevorzugt beides. In bevorzugter Ausgestaltung haben der Leit- und der Laufschaufelkranz dann eine horizontale Nabenkontur, hat also die Nabe in einem Axialschnitt betrachtet (Schnittebene beinhaltet Längsachse) einen im Wesentlichen achsparallelen Verlauf, ist also bspw. eine in dem Schnitt in die Nabe gelegte Ausgleichsgerade um weniger als 10°, 5°, 3° bzw. 1° zur Axialrichtung verkippt.

Die Erfindung betrifft ferner ein Mantelstromtriebwerk, das zusätzlich zu der Niederdruckturbine einen *Fan* aufweist. Dieser ist dabei über ein Getriebe an die Niederdruckturbine gekoppelt, sodass im Betrieb die Niederdruckturbine, also deren Laufschaufelkranz bzw. -kränze, schneller als der *Fan* drehen.

Ferner betrifft die Erfindung die Verwendung der Niederdruckturbine bzw. des Mantelstromtriebwerks, wobei der bzw. die Laufschaufelkränze der Niederdruckturbine mit einer ADP-Drehzahl von mindestens achttausend Umdrehungen pro Minute betrieben werden. Eine mögliche Obergrenze liegt bei zwölftausend Umdrehungen pro Minute, vgl. auch die vorstehenden Anmerkungen.

### Kurze Beschreibung der Zeichnungen

Im Folgenden wird die Erfindung anhand eines Ausführungsbeispiels näher erläutert, wobei die einzelnen Merkmale im Rahmen der nebengeordneten Ansprüche auch in anderer Kombination erfindungswesentlich sein können und auch weiterhin nicht im Einzelnen zwischen den unterschiedlichen Anspruchskategorien unterschieden wird.

Im Einzelnen zeigt
- Figur 1: in schematischer Darstellung ein Mantelstromtriebwerk in einem Axialschnitt;
- Figur 2: einen Ausschnitt eines erfindungsgemäßen Schaufelkranzes in einem Kegelschnitt;
- Figur 3: einen Axialschnitt einer Niederdruckturbine zur Illustration einer horizontalen Nabenkontur.

### Bevorzugte Ausführung der Erfindung

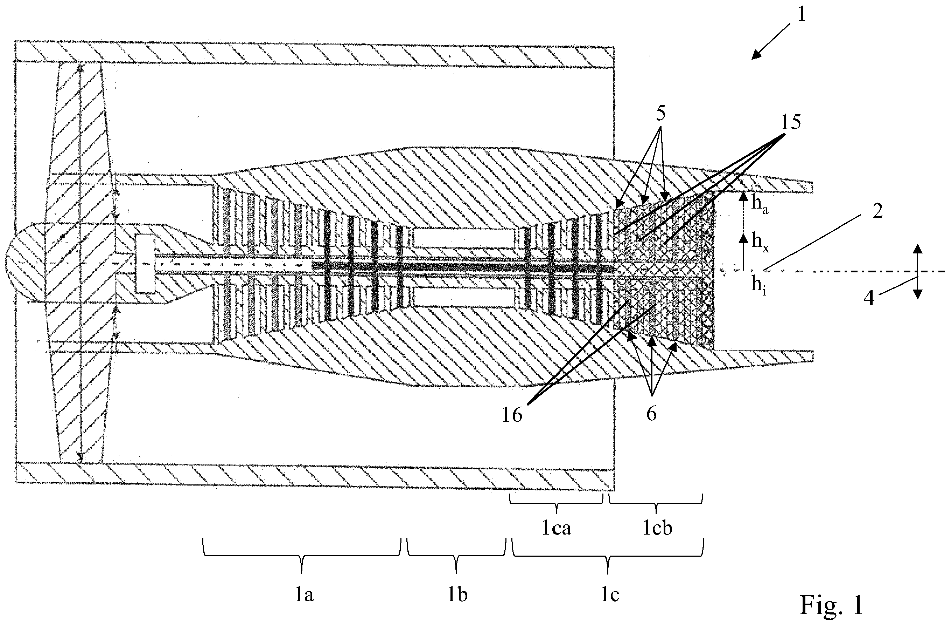

Fig. 1 zeigt ein Mantelstromtriebwerk 1 in einem schematischen Axialschnitt, also in einer seine Längsachse 2 beinhaltenden Schnittebene betrachtet. Dazu senkrecht liegen die Radialrichtungen 4. Funktional gliedert sich das Mantelstromtriebwerk 1 in Verdichter 1a, Brennkammer 1b und Fluggasturbine 1c, wobei Letztere eine Hochdruckturbine 1ca und eine Niederdruckturbine 1cb aufweist. Im Betrieb wird angesaugte Luft im Verdichter 1a komprimiert, in der nachgelagerten Brennkammer 1b mit hinzugemischtem Treibstoff verbrannt und wird das entstehende Heißgas dann in der Fluggasturbine 1c expandiert. In der Niederdruckturbine 1cb sind exemplarisch Leitschaufelkränze 5 und Laufschaufelkränze 6 referenziert. Erstere weisen umlaufend verteilt jeweils mehrere Leitschaufeln 15 auf, Letztere jeweils mehrere Laufschaufeln 16 (die umlaufende Anordnung ist in dem Axialschnitt nicht im Einzelnen zu erkennen).

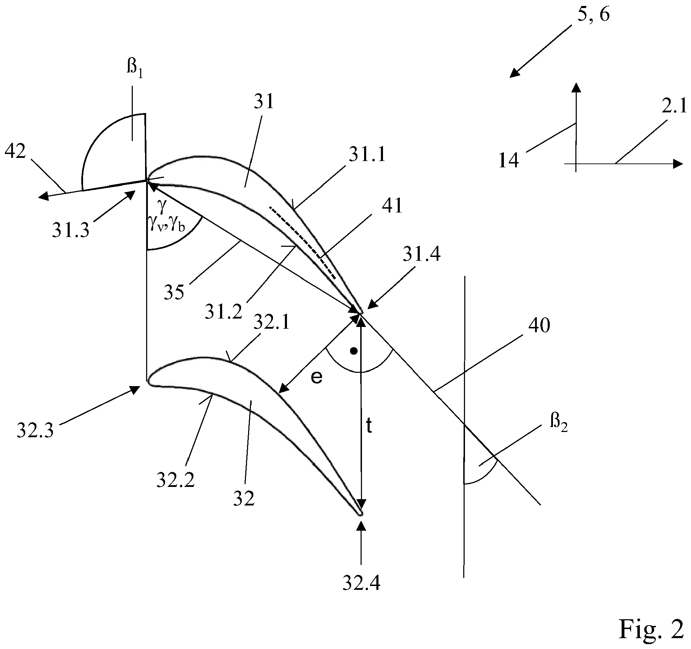

**Fig. 2** zeigt einen Ausschnitt eines Schaufelkranzes 20, bei dem es sich sowohl um einen Leitschaufelkranz 5 als auch einen Laufschaufelkranz 6 handeln kann. Zur Orientierung ist zusätzlich zu einer Axialrichtung 2.1 eine Umlaufrichtung 14 dargestellt.

Im Einzelnen sind in Fig. 2 ein erstes Schaufelblatt 31 und ein nächstbenachbartes, zweites Schaufelblatt 32 dargestellt. Die Schaufelblätter 31, 32 haben jeweils eine Saugseitenfläche 31.1, 32.1 und eine Druckseitenfläche 31.2, 32.2, wobei sich diese Seitenflächen jeweils zwischen Vorderkante 31.3, 32.3 und Hinterkante 31.4, 32.4 erstrecken. Für das erste Schaufelblatt 31 ist ferner ein Staffelungswinkel y dargestellt, der druckseitig des Schaufelblatts zwischen der Sehne 35 und der Umlaufrichtung 14 genommen wird.

Im Falle des Leitschaufelkranzes 5 ist der Staffelungswinkel γᵥ < 45° eingestellt, wobei er über die radiale Schaufelhöhe im Wesentlichen konstant sein kann. Bei dem Leitschaufelkranz ist der Staffelungswinkel in Abhängigkeit von einer Radialposition h_{X}, vgl. Fig. 1 zur Illustration, eingestellt. Dabei kann der Staffelungswinkel γ_{b} radial innen (hᵢ) insbesondere < 62° sein, radial außen (hₐ) hingegen < 30°.

Ferner ist für die Schaufelblätter 31, 32 ein Verhältnis e/t < 0,31 eingestellt. Dabei entspricht t der Teilung, also dem in Umlaufrichtung 14 zwischen den Hinterkanten 31.3, 32.3 genommenen Abstand. Der kleinste Strömungsquerschnitt e ergibt sich druckseitig des ersten Schaufelblatts 31 von dessen Hinterkante 31.4 zur Saugseitenfläche 32.1, und zwar als kürzeste Verbindungsstrecke im Kegelschnitt.

Ein Metallwinkel β₁ liegt zwischen 50° und 85°, er wird saugseitig zwischen einer Tangente 42 an die Skelettlinie 41 und der Umlaufrichtung 14 genommen. Der Abströmwinkel β₂ entspricht dem Winkel, welcher druckseitig zwischen der Senkrechten 40 zur kürzesten Verbindungsstrecke e an der Hinterkante 31.4 und der Umlaufrichtung 14 genommen werden kann. Der Abströmwinkel β₂ liegt bei rund 16°.

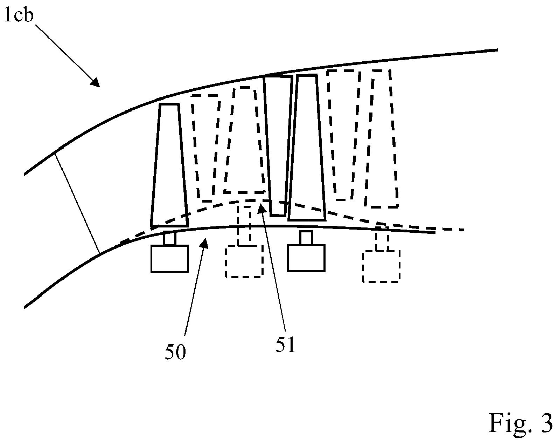

**Figur 3** zeigt eine Niederdruckturbine 1cb in einem Axialschnitt (Schnittebene beinhaltet die Längsachse 2 gemäß Figur 1). Die durchgezogene Linie illustriert eine im Wesentlichen horizontale Nabenkontur 50, die sich mit dem vorstehend geschilderten Schaufelblattdesign realisieren lässt und bspw. hinsichtlich eines kompakten und gewichtsreduzierten Aufbaus von Vorteil sein kann, vgl. die Beschreibungseinleitung im Detail. Zum Vergleich ist strichliert auch eine konventionelle Nabenkontur 51 dargestellt.

### BEZUGSZEICHENLISTE

| | |
|---|---|
| Mantelstromtriebwerk | 1 |
| Verdichter | 1a |
| Brennkammer | 1b |
| Fluggasturbine | 1c |
| Hochdruckturbine | 1ca |
| Niederdruckturbine | 1cb |
| Längsachse | 2 |
| Axialrichtung | 2.1 |
| Radialrichtungen | 4 |
| Leitschaufelkränze | 5 |
| Laufschaufelkränze | 6 |
| Umlaufrichtung | 14 |
| Leitschaufeln | 15 |
| Laufschaufeln | 16 |
| Schaufelkranz | 20 |
| Erstes Schaufelblatt | 31 |
| Zweites Schaufelblatt | 32 |
| Saugseitenfläche | 31.1, 32.1 |
| Druckseitenfläche | 31.2, 32.2 |
| Vorderkante | 31.3, 32.3 |
| Hinterkante | 31.4, 32.4 |
| Sehne | 35 |
| Senkrechte | 40 |
| Tangente | 42 |
| Skelettlinie | 41 |
| Horizontale Nabenkontur | 50 |
| Konventionelle Nabenkontur (zur Veranschaulichung) | 51 |
| Metallwinkel | β₁ |
| Abströmwinkel | β₂ |
| Teilung | t |

| | |
|---|---|
| Staffelung | γ |
| Freier Strömungsquerschnitt | e |
| Schaufelblatthöhe | h |
| Gitterbreite | b |
| Mittlerer Radius | rₘ |

## Patentansprüche

1. Leitschaufelkranz (5) für eine Niederdruckturbine (1cb) einer Fluggasturbine (1c) eines Mantelstromtriebwerks (1), mit
mehreren in Umlaufrichtung (14) aufeinanderfolgenden Schaufelblättern (31, 32),
wobei ein jeweiliges Schaufelblatt (31, 32) mit einem Staffelungswinkel γᵥ kleiner 45° angeordnet ist, γᵥ < 45°,
und wobei ein erstes und ein dazu in der Umlaufrichtung benachbartes zweites Schaufelblatt (31, 32) solchermaßen vorgesehen sind, dass ein Verhältnis e/t, das sich in einem Kegelschnitt betrachtet ergibt aus
- einem kleinsten freien Strömungsquerschnitt e, der druckseitig des ersten Schaufelblatts (31) von dessen Hinterkante (31.4) zu einer Saugseite (32.1) des zweiten Schaufelblatts (32) genommen wird, und
- einer Teilung t der Schaufelblätter (31, 32),
kleiner 0,31 ist, e/t < 0,31.

2. Laufschaufelkranz (6) für eine Niederdruckturbine (1cb) einer Fluggasturbine (1c) eines Mantelstromtriebwerks (1), mit
mehreren in Umlaufrichtung (14) aufeinanderfolgenden Schaufelblättern (31, 32),
wobei, bezogen auf eine jeweilige Radialposition h_{X}, die von Null am radial inneren Ende (h; = 0) bis Eins am radial äußeren Ende (hₐ = 1) eines jeweiligen Schaufelblatts (31, 32) bemessen wird, das jeweilige Schaufelblatt (31, 32) in Kegelschnitten betrachtet, die auf den unterschiedlichen Radialpositionen hₓ, insbesondere durch die Vorder- und Hinterkante, genommen werden, jeweils mit einem Staffelungswinkel γ_{b} angeordnet ist, der sich ergibt als γ_{b}< 62° - (32° · hₓ),
und wobei ein erstes und ein dazu in der Umlaufrichtung benachbartes zweites Schaufelblatt (31, 32) solchermaßen vorgesehen sind, dass ein Verhältnis e/t, das sich in einem Kegelschnitt betrachtet ergibt aus
- einem kleinsten freien Strömungsquerschnitt e, der druckseitig des ersten Schaufelblatts (31) von dessen Hinterkante (31.4) zu einer Saugseite (32.1) des zweiten Schaufelblatts (32) genommen wird, und
- einer Teilung t der Schaufelblätter (31, 32),
kleiner 0,31 ist, e/t < 0.31.

3. Schaufelkranz (5, 6, 20) nach Anspruch 1 oder 2, bei welchem ein jeweiliges Schaufelblatt (31, 32) zumindest in den radial äußeren 5 % seiner radialen Schaufelhöhe h an seiner Vorderkante (31.3, 32.3) einen Metallwinkel β₁ hat, der größer als 50° ist, β₁ > 50°.

4. Schaufelkranz (5, 6, 20) nach einem der vorstehenden Ansprüche, bei welchem ein jeweiliges Schaufelblatt (31, 32) zumindest in den radial äußeren 5 % seiner radialen Schaufelhöhe h an seiner Vorderkante (31.3) einen Metallwinkel β₁ hat, der kleiner als 85° ist, β₁ < 85°.

5. Schaufelkranz (5, 6, 20) nach einem der vorstehenden Ansprüche, der für eine ADP-Drehzahl von mindestens 8000 und höchstens 12000 Umdrehungen pro Minute ausgelegt ist.

6. Schaufelkranz (5, 6, 20) nach einem der vorstehenden Ansprüche, bei welchem ein mittlerer Radius rₘ mindestens 0,15 m und höchstens 0,6 m beträgt.

7. Schaufelkranz (5, 6, 20) nach einem der vorstehenden Ansprüche, bei welchem ein Verhältnis h/b, das sich mit einer radialen Schaufelblatthöhe h eines jeweiligen Schaufelblatts (31, 32) zu einer axialen Gitterbreite b ergibt, mindestens 2 und höchstens 5,5 beträgt, 2 ≤ h/b ≤ 5,5.

8. Schaufelkranz (5, 6, 20) nach einem der vorstehenden Ansprüche, bei welchem ein jeweiliges Schaufelblatt (31, 32) an seiner Hinterkante (31.4, 32.4) zumindest auf einer jeweiligen Kanalhöhe, vorzugsweise in einem Bereich von mindestens 10%, 30%, 50%, 70% oder 90% der radialen Kanalerstreckung, einen Abströmwinkel β₂ hat, der mindestens 14° und höchstens 18° beträgt, 14° ≤ β₂ ≤ 18°.

9. Niederdruckturbine (1cb) einer Fluggasturbine (1c) eines Mantelstromtriebwerks (1), mit einem Leitschaufelkranz (5) nach Anspruch 1 und/oder einem Laufschaufelkranz (6) nach Anspruch 2.

10. Niederdruckturbine (1cb) nach Anspruch 9, bei welchem der Leit- und/oder der Laufschaufelkranz (5, 6) eine horizontale Nabenkontur (50) haben.

11. Mantelstromtriebwerk (1) mit einem Fan und einer Niederdruckturbine (1cb) nach Anspruch 9 oder 10, wobei der Fan über ein Getriebe an die schneller drehende Niederdruckturbine (1cb) gekoppelt ist.

12. Verwendung der Niederdruckturbine (1cb) nach Anspruch 9 oder 10 oder des Mantelstromtriebwerks (1) nach Anspruch 11, wobei der Laufschaufelkranz (6) mit einer ADP-Drehzahl von mindestens 8000 und höchstens 12000 Umdrehungen pro Minute betreiben wird.
